# EUROPÄISCHE PATENTSCHRIFT

(11) **EP 3 166 741 B1**
(45) Veröffentlichungstag und Bekanntmachung des Hinweises auf die Patenterteilung: **06.03.2019**
(21) Anmeldenummer: 15745359.8
(22) Anmeldetag: 30.06.2015
(51) Int. Cl.: B22F 3/105, C22C 1/04, C22C 27/04, B22F 1/00, B22F 1/02, B33Y 10/00, B33Y 70/00

(54) **VERFAHREN ZUR HERSTELLUNG EINES BAUTEILS**
METHOD FOR PRODUCING A COMPONENT
PROCÉDÉ DE FABRICATION D'UNE PIÈCE

(30) Priorität: 09.07.2014 AT 2772014 U
(43) Veröffentlichungstag der Anmeldung: 17.05.2017
(73) Patentinhaber: Plansee SE, 6600 Reutte (AT)
(72) Erfinder: KESTLER, Heinrich, 6600 Reutte (AT); LEICHTFRIED, Gerhard, 6600 Reutte (AT); O'SULLIVAN, Michael, 6600 Ehenbichl (AT); TABERNIG, Bernhard, 6600 Pflach (AT)
(74) Vertreter: Ciesla, Bettina
(86) Internationale Anmeldenummer: PCT/AT2015/000093
(87) Internationale Veröffentlichungsnummer: WO 2016/004448

(56) Entgegenhaltungen:
- EP-A2- 2 055 412
- VAN BAEL S ET AL: "Micro-CT-based improvement of geometrical and mechanical controllability of selective laser melted Ti6Al4V porous structures", MATERIALS SCIENCE AND ENGINEERING A: STRUCTURAL MATERIALS: PROPERTIES, MICROSTRUCTURES AND PROCESSING, ELSEVIER BV, NL, Bd. 528, Nr. 24, 15. Juni 2011 (2011-06-15), Seiten 7423-7431, XP028246421, ISSN: 0921-5093, DOI: 10.1016/J.MSEA.2011.06.045 [gefunden am 2011-06-22]
- JIQIAO L ET AL: "Particle size characterization of ultrafine tungsten powder", INTERNATIONAL JOURNAL OF REFRACTORY METALS AND HARD MATERIALS, ELSEVIER PUBLISHERS, BARKING, GB, Bd. 19, Nr. 2, 1. März 2001 (2001-03-01), Seiten 89-99, XP004381989, ISSN: 0263-4368, DOI: 10.1016/S0263-4368(00)00051-2

## Beschreibung

Die Erfindung betrifft ein Verfahren zur Herstellung eines Bauteils aus Refraktärmetall oder einer Refraktärmetalllegierung mit einem Refraktärmetallgehalt > 50 At.%, das die Schritte Bereitstellen eines aus Partikeln gebildeten Pulvers und Verfestigen des Pulvers unter Einwirken eines Laser- oder Elektronenstrahls umfasst.

Verfahren bei denen ein Bauteil auf Basis von digitalen 3D-Konstruktionsdaten durch lagenweises Aufbringen eines Pulvers und Verfestigen des Pulvers aufgebaut wird, werden als additive Fertigungsmethoden bezeichnet. Synonym verwendete Begriffe sind beispielsweise generative Fertigung, 3D-Druck oder digitale photonische Fertigung. Additive Fertigungsverfahren zeichnen sich unter anderem durch folgende Vorteile aus:
- Hoher Freiheitsgrad für Bauteildesign,
- keine Werkzeuge erforderlich und
- hohe Ressourceneffizienz.

Beispielsweise zeigt die Veröffentlichung von S. Van Bael et al. / Materials Science and Engineering A 528 (2011) 7423-7431 die Herstellung von porösen Strukturen aus Titan-Aluminium-Legierungen über Selektives Laser Schmelzen.

Neben der Realisierung von Bauteilen mit funktionalem Design liegt ein großes Potential auch in der Entwicklung von neuen Werkstoffen, wie beispielsweise von funktional gradiert aufgebauten Werkstoffen, Hybrid-Verbundwerkstoffen, Werkstoffen mit optimierter Mikrostruktur oder bionischen Werkstoffen.

Ausgehend von metallischen Pulvern eignen sich dazu beispielsweise das selektive Laser-Sintern (selective laser sintering - SLS), das selektive LaserSchmelzen (selective laser melting - SLM), Laser Metal Deposition (LMD), Elektronenstrahlschmelzen (electron beam melting - EBM) oder Powder Bed sowie Inkjet Head 3D-Printing. Beim selektiven Laser-Sintern / -Schmelzen werden Pulverlagen mit einer Stärke typischerweise im Bereich von 20 bis 100 µm aufgebracht. Die Laserleistungen liegen heute typischerweise bei 200 bis 1.000 W, wobei zukünftig auch Laser mit höherer Leistung zur Verfügung stehen werden. Der Laserstrahl scannt nun unter einer Schutzgasatmosphäre, z.B. Argon oder Stickstoff, mit einer Geschwindigkeit von beispielsweise bis zu 7 m/s die Pulverlage ab. Unter der Energieeinwirkung wird die Pulverlage verfestigt. Typischerweise geht damit auch eine Verdichtung einher. Der Fokusdurchmesser des Laserstrahls liegt typischerweise im Bereich von 20 bis 200 µm, in Einzelfällen bis 1.000 µm. Die Aufbaurate liegt typischerweise im Bereich von 5 bis 15 cm³/h. Das Verfahren ermöglicht Bauteile mit einer Oberflächenqualität Rz typischerweise im Bereich von 20 bis 100 µm und einer Genauigkeit typischerweise im Bereich von 50 bis 100 µm. Um die Aufbaurate zu erhöhen, gibt es die Möglichkeit, den Randzonenbereich mit einem kleinen Fokusdurchmesser, beispielsweise im Bereich von 200 µm, aufzubauen, um eine gute Oberflächenqualität und Genauigkeit zu erzielen. Im Kernbereich wird mit einem größeren Fokusdurchmesser, beispielsweise von 1.000 µm, die Pulverlage verfestigt / verdichtet, um eine hohe Aufbaurate zu erzielen.
Bei LMD wird das Pulver nicht lagenweise wie bei SLS / SLM aufgebracht, sondern direkt im Bereich des Laserstrahls eingebracht. Die so hergestellten Schmelzraupen haben typischerweise eine Breite von 0,3 bis 3 mm.

Beim Elektronenstrahlschmelzen werden Pulverlagen mit Stärken typischerweise im Bereich von ca. 50 bis 100 µm aufgebracht. Die typischen Leistungen derzeit verfügbarer Elektronenstrahlschmelzanlagen liegen bei 3 bis 4 kW. Da es beim Einwirken des Elektronenstrahls auf die Pulverlage zu Aufladungsvorgängen kommt, ist es beim Elektronenstrahlschmelzen erforderlich, in einem ersten Durchlauf die Pulverpartikel untereinander bzw. die Pulverpartikel mit der zuvor aufgebrachten bereits verfestigten Pulverlage oder bei der ersten Pulverlage mit der Bodenplatte elektrisch leitend zu verbinden. Dies kann beispielsweise durch einen defokussierten Elektronenstrahl erfolgen, der die Pulverpartikel über einen Festphasensintervorgang miteinander verbindet. Da mit Elektronenstrahlschmelzen sehr hohe Scangeschwindigkeiten von bis zu 8.000 m/s sowie dickere Pulverlagen möglich sind, liegt auch die Aufbaurate deutlich höher als beim selektiven Laser-Sintern bzw. -Schmelzen. So liegt die Aufbaurate bei Ti6AI4V bei 55 bis 80 cm³/h. Der Fokusdurchmesser des Elektronenstrahls lässt sich typischerweise in einem Bereich von 0,1 bis 1 mm variieren, wobei es mit kleinem Fokusdurchmesser wiederum möglich ist, die Genauigkeit und die Rauheit, die typischerweise bei 130 bis 200 µm bzw. Rz > 100 µm liegen, zu verbessern.

Damit pulverbasierende additive Fertigungsverfahren eine breitere Anwendung erzielen können, sind neben der Verbesserung von Oberflächenrauheit und Genauigkeit noch die folgenden weiteren technologischen Herausforderungen zu lösen:
- Weitere Erhöhung der Aufbaurate
- Reduzierung der machbaren Wandstärke (gegenwärtig begrenzt mit ca. 100 µm)
- Erhöhung der Prozesskonstanz
- Verbreiterung der Werkstoffpallette
- Erhöhung der Bauteilgröße (gegenwärtige Grenze 630x500x400 mm³)
- Reduzierung der inneren Spannungen / des Verzugs.

Diese Herausforderungen / Eigenschaften sind in einem hohen Ausmaß vom Verfestigungs- / Verdichtungsprozess beeinflusst. Dieser hängt wiederum in einem hohen Maß mit den physikalischen Pulvereigenschaften zusammen.

Der Verfestigungs- / Verdichtungsprozess kann über Festphasensintern, Flüssigphasensintern oder Schmelzen / Erstarren erfolgen. Beim Festphasensintern erfolgt die Verfestigung / Verdichtung typischerweise bei einer Temperatur im Bereich von 0,7 x bis knapp unter Solidustemperatur. Die treibende Kraft ist dabei die Reduzierung der Oberflächenenergie, der wichtigste Transportmechanismus die Diffusion. Die Diffusion wiederum kann über die Oberfläche (Oberflächendiffusion), über Korngrenzen (Korngrenzendiffusion) oder über das Partikelvolumen (Volumen- oder Gitterdiffusion) erfolgen. Im Bereich der Kontaktstelle zwischen zwei Partikeln ist der eingeschriebene Radius klein, während im Bereich der Partikeloberfläche der Radius vergleichsweise groß ist. Da die Leerstellendichte vom Radius abhängt und mit sinkendem Radius steigt, kommt es zu Lehrstellendiffusion aus dem Bereich der Kontaktfläche zwischen zwei Teilchen zu den Bereichen mit größerem Radius, oder gleichbedeutend, zu Atomdiffusion aus den Bereichen mit größerem Radius zu den Kontaktflächen zwischen den Partikeln. Dabei bildet sich im Bereich der Kontaktfläche ein sogenannter Sinterhals zwischen den Partikeln aus. Beim Flüssigphasensintern tritt neben fester Phase zumindest zeitweise auch flüssige Phase auf.

Bei Verfestigung / Verdichtung über Schmelzverfahren ist es wesentlich, dass ein gleichmäßiger Erstarrungsschwund auftritt. Zudem ist es vorteilhaft, wenn die Pulverschüttung gleichmäßig erwärmt wird, was wiederum eine ausreichend hohe Wärmeleitfähigkeit in der Pulverlage erfordert. Für die Verdichtung ist es zudem wesentlich, dass die entstehende flüssige Phase die noch vorhandenen festen Partikeln gut benetzt. Dies wird zum einen durch die Kapillarkräfte beeinflusst, die wiederum von der Dichte der Pulverschüttung abhängen und zum anderen von oberflächenchemischen Effekten. Zudem sind Marangoni Konvektion, Verklumpungen (balling) oder Verdampfungen zu vermeiden.

Refraktärmetalle werden heute noch nicht im industriellen Maßstab über additive Fertigungsverfahren verfestigt / verdichtet. Unter Refraktärmetallen werden im Zusammenhang mit dieser Erfindung die Metalle Niob, Tantal, Chrom, Molybdän, Wolfram und Rhenium subsumiert. Dass sich additive Fertigungsverfahren für diese Werkstoffe noch nicht breit durchgesetzt haben, hängt auch damit zusammen, dass für diese Fertigungsverfahren nur bedingt geeignete Pulver zur Verfügung stehen. Mit den derzeit verwendeten Pulvern sind die resultierenden Material- und Prozesseigenschaften für eine breite Anwendung dieser Fertigungsmethoden nicht ausreichend gut.

Die Pulver müssen insbesondere ausgezeichnete Fülleigenschaften aufweisen, damit in jeder Pulverlage eine gleichmäßige und ausreichend hohe Dichte gewährleistet ist. Eine niedrige bzw. ungleichmäßige Dichte der Pulverlage führt zu einem ungleichmäßigen Schwund bzw. zur Ausbildung von größeren Poren bzw. Porennestern. Über Festphasensintervorgänge lassen sich bei den gegebenen kurzen Energieeinwirkzeiten Verfestigung / Verdichtung nur erzielen, wenn die Partikelabstände klein und die Sinteraktivität hoch sind. Eine ausreichende Verfestigung / Verdichtung über Festphasensintern ist beispielsweise dann erforderlich, wenn das Pulver über einen Elektronenstrahlschmelzvorgang verdichtet wird, da hier, wie bereits erwähnt, in einem ersten Durchlauf (Vorheizen) die Partikel der Pulverlage soweit miteinander verbunden werden müssen, dass im zweiten Durchlauf (Schmelzvorgang) die über den Elektronenstrahl eingebrachten Ladungsträger über die zuvor aufgebauten Lagen bzw. über die Bodenplatte abgeleitet werden können. Werden im ersten Durchlauf die Partikel nicht in ausreichend hohem Umfang miteinander verbunden, kommt es zu Aufladungseffekten bzw. in weiterer Folge zu Abstoßung der Pulverpartikel und zu einer Zerstörung der aufgebrachten Pulverlage.

Auch beim selektiven Lasersintern und -schmelzen sind eine gleichmäßige und hohe Dichte der aufgebrachten Pulverlage vorteilhaft. Insbesondere beim Lasersintern wirkt sich eine hohe Sinteraktivität in der festen Phase günstig aus. Beim Laserschmelzen und beim Lasersintern mit flüssiger Phase ist es vorteilhaft, wenn die entstehende Schmelze eine niedrige Oberflächenspannung aufweist. Gelingt es in festen Phase eine ausreichend hohe Verfestigung / Verdichtung zu erzielen oder sind die Anforderungen an die zu erreichende Dichte gering, so ist das SLS dem SLM vorzuziehen, da damit bessere Oberflächengüten bzw. höhere Genauigkeiten der Bauteile erzielt werden können. Damit ist es beispielsweise möglich, nachgelagerte Bearbeitungsprozesse zu reduzieren oder vollständig zu vermeiden.

Es ist daher Aufgabe der gegenständlichen Erfindung, ein Verfahren bereitzustellen, das die Herstellung von Bauteilen aus Refraktärmetallen mit zumindest einer der folgenden Eigenschaften ermöglicht:
- Hohe Oberflächenqualität
- Hohe Genauigkeit
- Geringe Wandstärke
- Hohe Dichte, bzw. geringe Fehlerdichte, wie z.B. Poren / Porennester
- Hohe statische und dynamische Festigkeit
- Hohe Duktilität
- Feinkörniges Gefüge
- Geringe Eigenspannungen.

Zudem soll das Verfahren eine hohe Aufbaurate ermöglichen.

Diese Aufgabe wird durch den unabhängigen Anspruch gelöst. Besondere Ausführungsformen sind in den Unteransprüchen wiedergegeben.

Das erfinderische Verfahren ermöglicht die Herstellung von Bauteilen aus Refraktärmetallen oder Refraktärmetalllegierungen mit einem Refraktärmetallgehalt von > 50 At.%. Wie bereits erwähnt, werden unter dem Begriff Refraktärmetalle die Metalle auf Basis von Niob, Tantal, Chrom, Molybdän, Wolfram und Rhenium subsumiert. Der Refraktärmetallgehalt der erfindungsgemäßen Refraktärmetalllegierungen beträgt > 50 At.%, bevorzugt > 70 oder > 80 At.%. Insbesondere bevorzugt beträgt der Refraktärmetallgehalt > 90, > 95 oder 99 At.%.

Erfindungsgemäß wird nun ein aus Partikeln gebildetes Pulver eingesetzt, das eine laseroptisch gemessene Partikelgröße d₅₀ von > 10 µm aufweist. Der d₅₀ Wert wird dabei mittels Laserdiffraktometrie gemessen. Die Messergebnisse werden als Verteilungskurve angegeben. Der d₅₀ Wert gibt dabei die mittlere Partikelgröße an. d₅₀ bedeutet, dass 50 Vol.% der Partikel kleiner sind als der angegebene Wert.

Im Weiteren weist das Pulver eine mittels BET gemessene, mittlere Oberfläche von > 0,08 m²/g auf. Die BET-Messung erfolgt dabei gemäß Norm (ISO 9277:1995, Messbereich: 0,01 - 300 m²/g; Gerät: Gemini II 2370; Ausheiztemperatur: 130°C; Ausheizzeit: 2 Stunden; Adsorptiv: Stickstoff; volumetrische Auswertung über Fünfpunktbestimmung). Bevorzugt beträgt die BET-Oberfläche > 0,1 oder > 0,13 m²/g. Besonders bevorzugt beträgt die BET-Oberfläche > 0,15, > 0,2 m²/g oder > 0,25 m²/g.

Das Pulver wird unter Einwirkung eines Laser- oder Elektronenstrahls verfestigt und/oder verdichtet. Bevorzugt wird dazu das Pulver lagenweise aufgebracht.

Das Verfahren zeichnet sich durch folgende Vorteile aus:
- Verbesserte Prozesseigenschaften beim Elektronenstrahlschmelzen: Beim Elektronenstrahlschmelzen wird im ersten Durchlauf (Vorheizvorgang), beispielsweise mit defokussiertem Elektronenstrahl, eine ausreichende Sinterhalsbildung über Festphasensintern erzielt. Damit werden unerwünschte Aufladungseffekte bei hoher Energiedichte (zweiter Durchlauf / Schmelzprozess) vermieden.
- Hohe Oberflächenqualität der so hergestellten Bauteile:
   Das erfindungsgemäße Pulver führt zu einer hohen Fülldichte (geringe Partikelabstände). Zudem weist es eine sehr hohe Sinteraktivität auf. Dies führt zu einem sehr gleichmäßigen Verdichtungs- / Verfestigungsprozess. Wenn die Anforderungen an die Bauteildichte nicht zu hoch sind, kann auf ein vollständiges Aufschmelzen verzichtet werden.
- Hohe Genauigkeit:
   Da der Verfestigungs- / Verdichtungsvorgang durch Festphasen- oder Flüssigphasen-Sintern (Sintern im Bereich fester und flüssiger Phase) erfolgen kann, können engere Toleranzen im Vergleich zur Verfestigung / Verdichtung durch Schmelzen / Erstarren eingehalten werden.
- Geringe Wandstärke:
   Da der Verfestigungs- / Verdichtungsvorgang durch Festphasen- oder Flüssigphasen-Sintern erfolgen kann, können geringere Wandstärken im Vergleich zur Verfestigung / Verdichtung durch Schmelzen / Erstarren erzielt werden, da eine Penetration der Schmelze in angrenzende, nicht zu verfestigende Bereiche der Pulverlage vermieden bzw. reduziert wird.
- Hohe Dichte bzw. geringe Fehlerdichte, wie z.B. Poren / Porennester:
   Das gleichmäßige Füllverhalten und die hohe Sinteraktivität reduzieren die Anzahl großer Poren und Porennester.
- Geringe Eigenspannungen:
   Da Eigenspannungen durch den Erstarrungs- / Abkühlprozess induziert werden, wirkt sich eine Reduzierung des Flüssigphasenanteils günstig aus.
- Feinkörniges Gefüge:
   Da die gleiche Dichte mit geringerem Energieeintrag erzielt werden kann, ist es möglich, ein feinkörnigeres Gefüge einzustellen.
- Hohe statische und dynamische Festigkeit:
   Die zuvor erwähnten Eigenschaften, beispielsweise die hohe Dichte, das feinkörnige Gefüge und die geringe Fehlerdichte, wirken sich günstig sowohl auf die statische als auch auf die dynamische Festigkeit aus.
- Hohe Duktilität:
   Die zuvor erwähnten Eigenschaften wirken sich auch günstig auf die Duktilität aus.

Zudem erhöht das erfindungsgemäße Verfahren auch die Aufbaurate. Dies trifft in besonders hohem Ausmaß auf das Elektronenstrahlschmelzen zu, da hier unerwünschte Aufladungsphänomene vollständig vermieden werden.

Vorteilhaft weisen die Partikel zumindest teilweise zur Oberfläche hin offene Poren auf. Dies verbessert die Sinterhalsbildung zwischen benachbarten Partikeln durch Oberflächendiffusion. Im Weiteren ist es günstig, wenn die Partikel zumindest teilweise Kugelform aufweisen. Damit ist auch in Kombination mit einer porösen Oberfläche gewährleistet, dass eine gleichmäßige und hohe Fülldichte der Pulverlage erreicht wird.

Im Weiteren ist es vorteilhaft, wenn der Beschichtungsstoff eine bi- oder multimodale Partikelverteilung aufweist. Eine bimodale Verteilung ist eine Häufigkeitsverteilung mit zwei Maxima. Eine multimodale Verteilung weist zumindest drei Maxima auf. Eine bi- bzw. multimodale Verteilung erhöht sowohl den Füllgrad der Pulverlage als auch begünstigt es die Verfestigung / Verdichtung über Festphasensintervorgänge. Als sehr günstig hat sich eine bi- oder multimodale Partikelgrößenverteilung im Falle des Elektronenstrahlschmelzens erwiesen

Im Weiteren ist es vorteilhaft, wenn das Pulver Partikel in Agglomerat und/oder Aggregatform umfasst, die aus Primärpartikeln gebildet sind. Die Partikel können dabei zumindest teilweise als Aggregate, zumindest teilweise als Agglomerate oder zumindest teilweise als eine Mischung aus Aggregaten und Agglomeraten vorliegen. Unter Aggregat wird dabei in der Pulvermetallurgie ein Cluster von Primärpartikeln verstanden, die über eine starke Bindung miteinander verbunden sind, während bei einem Agglomerat ein Cluster von primären Partikeln über eine schwache Bindung miteinander verbunden sind (siehe beispielsweise German, R.: "introduction to powder metallurgy science", MPIF, Princeton (1984), 32). Als Aggregat wird im Kontext dieser Erfindung ein Cluster bezeichnet, das sich nicht durch übliche Ultraschalldeagglomeration aufbrechen lässt, während Agglomerate zumindest teilweise in die Primärpartikel zerlegbar sind. Die Ultraschalldeagglomeration wird dabei bei 20 kHz und 600 W durchgeführt. In vorteilhafter Weise liegt das Pulver als Aggregat vor. Die Bindung zwischen den Primärpartikeln, aus denen das Aggregat aufgebaut ist, ist dabei stoffschlüssig (metallurgical bonding) bevorzugt ohne Mitwirken von anderen Elementen. In besonders vorteilhafter Weise liegen > 50, insbesondere > 70 und besonders vorteilhaft > 90% aller Partikel als Aggregat oder Agglomerat vor. Die Auswertung erfolgt dabei folgendermaßen. Es werden 5 Proben entnommen, die mittels Rasterelektronenmikroskop untersucht werden. Bei einer Vergrößerung, die im Bildausschnitt 20 bis 50 Partikel umfasst, lässt sich in einfacher Weise die Summe der Partikel ermitteln, die als Aggregat oder Agglomerat vorliegen. Danach wird die Anzahl der als Aggregat oder Agglomerat vorliegenden Partikel auf die Gesamtzahl der ausgewerteten Partikel bezogen und der Mittelwert aus 5 Proben ermittelt. Die Agglomerat- bzw. Aggregatform ermöglicht die Kombination von Kugelform mit einer sehr hohen Oberfläche, was wiederum Fülldichte und Festphasensintervorgänge begünstigt.

Im weiteren hat es sich als vorteilhaft erwiesen, wenn das Pulver 0,005 bis 5 At.% zumindest eines Elements aus der Gruppe Ni, Co, Fe und Pd enthält. Durch diese Legierungselemente werden auch bei sehr kurzen Energieeinwirkzeiten neben Oberflächendiffusion auch Korngrenzendiffusionsvorgänge ausgelöst, was sich sowohl günstig auf die Partikelkontaktierung beim Elektronenstrahlschmelzen, als auch auf den Verdichtungsprozess beim selektiven Lasersintern erwiesen hat. Da diese Elemente die Oberflächenspannung der schmelzflüssigen Phase reduzieren, können sowohl beim SLM als auch beim EBM sehr glatte Oberflächen erzielt werden.

Eine weitere bevorzugte Ausführungsform liegt darin, dass das Pulver zumindest teilweise als Komposit-Pulver vorliegt. Als Komposit-Pulver werden insbesondere Pulver verstanden, die aus zwei oder mehreren Phasenbestandteilen bestehen, wobei in bevorzugter Weise diese Phasenbestandteile sehr klein und homogen verteilt sind. Eine bevorzugte Möglichkeit eines Komposit-Pulvers stellt dabei ein Pulver dar, das zumindest teilweise in beschichteter Form vorliegt. Die Schicht kann dabei sehr dünn (zum Beispiel 50 nm bis 5 µm) ausgeführt sein. Als besonders günstig hat es sich erwiesen, wenn die Schicht ein Metall, eine Legierung oder eine Verbindung umfasst, die einen tieferen Schmelzpunkt hat als das Partikel im kernnahen Bereich. Der Schmelzpunktsunterschied (in K) beträgt dabei bevorzugt 0,04 bis 0,7 x Schmelzpunkt (in K) des zentrumsnahen Bereichs. Besonders bevorzugte Bereiche sind 0,04 bis 0,5 und 0,04 bis 0,3 x Schmelzpunkt (in K). Dadurch ist es möglich, dass zum Verfestigungs- / Verdichtungsvorgang nicht nur Festphasensintervorgänge beitragen, sondern dass die Verdichtung über Flüssigphasensintern erfolgt. Die flüssige Phase wird dabei bevorzugt aus der Beschichtung der Partikel gebildet. Die flüssige Phase kann wiederum in günstiger Weise bereichsweise das restliche Partikel anlösen. Zudem weist das Material der Beschichtung vorteilhaft einen ausreichend niedrigen Dampfdruck auf. Besonderes vorteilhaft wird die Beschichtung porös ausgeführt. Damit können Festphasensintervorgänge sowohl durch die Reduzierung der Solidustemperatur als auch durch Erhöhung der Oberfläche beschleunigt werden. Im Weiteren ist es vorteilhaft, wenn die aus der Beschichtung gebildete Phase eine niedrigere Oberflächenspannung aufweist als dies der Fall wäre, wenn die Partikel unbeschichtet eingesetzt werden.

In einfacher Weise kann eine poröse Oberflächenschicht durch ein Wirbelschichtverfahren abgeschieden werden. In der Wirbelschicht (auch Fließbett genannt) wird durch ein Trägermedium (bevorzugt ein Gas) das noch unbeschichtete Pulver bewegt. Bei einer bestimmten Strömungsgeschwindigkeit geht die Pulverschüttung in die Wirbelschicht über. Bei der Wirbelschicht-Beschichtung kann nun ein Slurry, der beispielsweise neben einer Flüssigkeit und einem Binder das Beschichtungsmaterial bevorzugt in sehr feiner Form enthält, über eine Düse in den Reaktionsraum eingesprüht und auf den Partikeln abgeschieden werden. Flüssigkeit und Binder können anschließend durch übliche Verfahren, wie beispielsweise Glühen entfernt werden.

Das erfindungswesentliche Pulver lässt sich jedoch beispielsweise in einfacher Weise auch durch Granulation einer Vorstufe des Metallpulvers, beispielsweise eines Oxid, und anschließender Reduktion herstellen. Als besonders geeignete Granulationsverfahren eignen sich beispielsweise die Sprühgranulation. Der dem Granulieren folgende Reduktionsschritt wird in bevorzugter Weise bei einer Temperatur > 500°C, insbesondere bevorzugt > 800°C durchgeführt.

Wie bereits erwähnt, wird das erfindungswesentliche Pulver in bevorzugter Weise für das Verdichten / Verfestigen durch Einwirken eines Elektronenstrahls verwendet. Das Pulver wird dazu lagenweise aufgebracht und in einem ersten Schritt (Vorheizvorgang) mit beispielsweise einem defokussierten Elektronenstrahl über Festphasensintervorgänge soweit verfestigt / verdichtet, dass zumindest teilweise Sinterhälse entstehen und im nachgelagerten Aufschmelzprozess unerwünschte Aufladungsphänomene verhindert werden können.
Das erfindungswesentliche Pulver eignet sich jedoch auch ausgezeichnet zum Verdichten unter Einwirken eines Laserstrahls, insbesondere wenn die Verfestigung / Verdichtung durch Festphasensintern oder Flüssigphasensintern erfolgt.

Im Folgenden ist die Erfindung beispielhaft beschrieben.

### Beispiel 1

Feinkörniges MoO₃ Pulver wurde in einen Rührtank eingebracht und mit einer Menge Wasser vermengt, so dass ein Slurry entstand. Dieser Slurry wurde in einer Sprühgranulationsanlage zu einem Granulat verarbeitet. Dieses Granulat wurde in einem zweistufigen Prozess zu Mo-Metallpulver (Reduktionstemperatur 600 bzw. 1050°C) reduziert. Das so hergestellte Mo-Metallpulver wurde bei 90 µm, abgesiebt. Die Pulverpartikel waren kugelförmig ausgebildet und wiesen zur Oberfläche hin offene Poren auf. Gemäß der in der Beschreibung gegebenen Definition lagen die Partikel in Agglomerat- / Aggregatform vor. Der gemäß der Beschreibung ermittelte d₅₀-Wert betrug 21 µm, die BET-Oberfläche 0,15 m²/g. Das so hergestellte Pulver wurde für das selektive Elektronenstrahlschmelzen eingesetzt. Der Prozess ist in der Beschreibung wiedergegeben. Das Vorheizen erfolgte mit defokussiertem Elektronenstrahl bei Bedingungen, die zu keinem Aufschmelzen führten. Beim darauf folgenden Scanschritt mit fokussiertem Elektronenstrahl, der zum vollständigen Aufschmelzen der Partikel führte, traten keine unerwünschten Aufladungsprozesse auf.

### Beispiel 2

Wolframpulver mit Kugelform, das bei 25 µm und 5 µm abgesiebt wurde, wurde mit 0,1 Ma.% feinkörnigem Ni Pulver gemischt. Der d₅₀- und der BET-Wert der Mischung betrugen > 10 µm bzw. > 0,08 m²/g. Mit der so hergestellten Pulvermischung wurden Sinterversuche bei sehr kurzen Prozesszeiten (Aufheizen auf 1200°C in 3 min.) durchgeführt, um die Sinterfähigkeit in der festen Phase bei geringen D x t Werten (D... Diffusionskoeffizient, t... Zeit) zu beurteilen und damit bewerten zu können, ob eine ausreichende Kontaktierung zwischen den Partikeln beim Vorheizen mit defokussiertem Elektronenstrahl bzw. beim Verfestigen / Verdichten mittels Laserstrahl (Lasersintern) eintritt. Vergleichsweise wurde reines W-Pulver mit Kugelform und der Siebfraktion 5 bis 25 µm (BET-Oberfläche < 0,08 m²/g) in 3 min. auf 1200°C erhitzt. Während bei Rein-Wolfram noch keine Sinterhalsbildung zu beobachten war, zeigte die erfindungsgemäße W-Ni Mischung schon Sinterhälse zwischen den Partikeln.

### Beispiel 3

WO₃ Pulver wurde in einen Rührtank eingebracht und mit einer Menge Wasser vermengt, so dass ein Slurry entstand. Dieser Slurry wurde in einer Sprühgranulationsanlage zu einem Granulat verarbeitet. Dieses Granulat wurde in einem einstufigen Prozess zu W-Metallpulver (Reduktionstemperatur 1000°C) reduziert. Das so hergestellte W-Metallpulver wurde bei 90 µm abgesiebt. Das Pulver war kugelförmig ausgebildet und wies zur Oberfläche hin offene Poren auf. Gemäß der in der Beschreibung gegebenen Definition lagen die Partikel in Agglomerat- / Aggregatform vor. Der gemäß der Beschreibung ermittelte d₅₀-Wert betrug 17 µm, die BET-Oberfläche 0,18 m²/g. Auf den Pulverpartikeln wurde eine ca. 1 µm dicke Ni-Schicht aufgebracht. In Anlehnung an Beispiel 2 wurde die Festphasensinterfähigkeit bei geringen D x t Werten durch schnelles Aufheizen ermittelt. Durch die Beschichtung war es möglich, eine Sinterhalsbildung bereits bei 1000°C zu erzielen.

## Patentansprüche

1. Verfahren zur Herstellung eines Bauteils aus Refraktärmetall oder einer Refraktärmetalllegierung mit einem Refraktärmetallgehalt > 50 At.%, wobei unter Refraktärmetallen die Metalle auf Basis von Niob, Tantal, Chrom, Molybdän, Wolfram und Rhenium subsumiert werden und wobei das Verfahren die Schritte Bereitstellen eines aus Partikeln gebildeten Pulvers und Verfestigen des Pulvers unter Einwirken eines Laser- oder Elektronenstrahls umfasst,
**dadurch gekennzeichnet,**
**dass** das Pulver eine laseroptisch gemessene Partikelgröße d₅₀ von > 10 µm und eine mittels BET gemessene mittlere Oberfläche > 0,08 aufweist.

2. Verfahren nach Anspruch 1, **dadurch gekennzeichnet, dass** die Oberfläche der Partikel zumindest teilweise Poren aufweist.

3. Verfahren nach einem der vorangehenden Ansprüche, **dadurch gekennzeichnet, dass** das Pulver eine bi- oder multimodale Partikelgrößenverteilung aufweist.

4. Verfahren nach einem der vorangehenden Ansprüche, **dadurch gekennzeichnet, dass** das Pulver Pulverpartikel in Agglomerat- und/oder Aggregatform umfasst, die aus Primärpartikeln gebildet sind.

5. Verfahren nach einem der vorangehenden Ansprüche, **dadurch gekennzeichnet, dass** das Pulver 0,005 bis 5 At.% zumindest eines Elements aus der Gruppe Ni, Co, Fe und Pd enthält.

6. Verfahren nach einem der vorangehenden Ansprüche, **dadurch gekennzeichnet, dass** das Pulver zumindest teilweise als Kompositpulver vorliegt.

7. Verfahren nach einem der vorangehenden Ansprüche, **dadurch gekennzeichnet, dass** das Pulver zumindest teilweise als beschichtetes Pulver vorliegt.

8. Verfahren nach einem der vorangehenden Ansprüche, **dadurch gekennzeichnet, dass** die Partikel zumindest teilweise in oberflächennahen Bereichen einen niedrigeren Schmelzpunkt als in zentrumsnahen Bereichen aufweisen.

9. Verfahren nach Anspruch 8, **dadurch gekennzeichnet, dass** der Schmelzpunktsunterschied (in K) 0,04 bis 0,7 x Schmelzpunkt (in K) des zentrumsnahen Bereichs beträgt.

10. Verfahren nach einem der vorangehenden Ansprüche, **dadurch gekennzeichnet, dass** die Pulverherstellung einen Granulationsschritt umfasst.

11. Verfahren nach Anspruch 10, **dadurch gekennzeichnet, dass** nach dem Granulationsschritt ein Reduktionschritt bei einer Temperatur > 500°C folgt.

12. Verfahren nach einem der vorangehenden Ansprüche, **dadurch gekennzeichnet, dass** die Pulverherstellung einen Beschichtungsschritt umfasst.

13. Verfahren nach einem der vorangehenden Ansprüche, **dadurch gekennzeichnet, dass** das Pulver > 80 At% zumindest eines Elements ausgewählt aus der Gruppe bestehend aus Mo und W enthält.

14. Verfahren nach einem der vorangehenden Ansprüche, **dadurch gekennzeichnet, dass** die BET-Oberfläche > 0,1 m²/g, bevorzugt > 0,13 beträgt.

15. Verfahren nach einem der vorangehenden Ansprüche, **dadurch gekennzeichnet, dass** das Pulvers lagenweise aufgebracht wird.

16. Verfahren nach einem der vorangehenden Ansprüche, **dadurch gekennzeichnet, dass** das Verfestigen des Pulvers unter Einwirken eines Elektronenstrahls erfolgt, wobei die Partikel des lagenweise aufgebrachten Pulvers in einem ersten Schritt durch Festphasensintern zumindest teilweise Sinterhälse bilden und in einem darauf folgenden Schritt zumindest teilweise aufgeschmolzen werden.

17. Verfahren nach Anspruch 16, **dadurch gekennzeichnet, dass** der erste Schritt mit defokussiertem Elektronenstrahl erfolgt.

18. Verfahren nach einem der Ansprüche 1 bis 15, **dadurch gekennzeichnet, dass** zumindest teilweise das Verfestigen des Pulvers durch Festphasensintern oder Flüssigphasensintern unter Einwirken eines Laserstrahls erfolgt.

## Claims

1. Process for producing a component from refractory metal or a refractory metal alloy having a refractory metal content > 50 at%, whereby the refractory metals encompass the metals based on niobium, tantalum, chromium, molybdenum, tungsten and rhenium, and whereby the method comprises steps of providing a powder formed of particles and solidifying the powder under the action of a laser beam or electron beam, **characterized in that**
the powder has a particle size d₅₀ as measured laser-optically of > 10 µm and an average surface area as measured by the BET method of
> 0.08 m²/g.

2. Process according to Claim 1, **characterized in that** the surface of the particles at least partly has pores.

3. Process according to any of the preceding claims, **characterized in that** the powder has a bimodal or multimodal particle size distribution.

4. Process according to any of the preceding claims, **characterized in that** the powder comprises powder particles in agglomerate form and/or aggregate form which are formed of primary particles.

5. Process according to any of the preceding claims, **characterized in that** the powder comprises 0.005 to 5 at% of at least one element from the group consisting of Ni, Co, Fe and Pd.

6. Process according to any of the preceding claims, **characterized in that** the powder is present at least partly as composite powder.

7. Process according to any of the preceding claims, **characterized in that** the powder is present at least partly as coated powder.

8. Process according to any of the preceding claims, **characterized in that** the particles at least partly have a lower melting point in near-surface regions than in near-centre regions.

9. Process according to Claim 8, **characterized in that** the melting point difference (in K) is 0.04 to 0.7 x melting point (in K) of the near-centre region.

10. Process according to any of the preceding claims, **characterized in that** powder production comprises a granulating step.

11. Process according to Claim 10, **characterized in that** the granulating step is followed by a reducing step at a temperature > 500°C.

12. Process according to any of the preceding claims, **characterized in that** powder production comprises a coating step.

13. Process according to any of the preceding claims, **characterized in that** the powder comprises > 80 at% of at least one element selected from the group consisting of Mo and W.

14. Process according to any of the preceding claims, **characterized in that** the BET surface area is > 0.1 m²/g, preferably > 0.13 m²/g.

15. Process according to any of the preceding claims, **characterized in that** the powder is applied layerwise.

16. Process according to any of the preceding claims, **characterized in that** the solidifying of the powder takes place under the action of an electron beam, with the particles of the layerwise-applied powder at least partly forming sinter necks in a first step through solid-phase sintering and being at least partly melted in a subsequent step.

17. Process according to Claim 16, **characterized in that** the first step takes place with defocused electron beam.

18. Process according to any of Claims 1 to 15, **characterized in that** the solidifying of the powder takes place at least partly by solid-phase sintering or liquid-phase sintering under the action of a laser beam.

## Revendications

1. Procédé de fabrication d'un composant en un métal réfractaire ou un alliage de métaux réfractaires ayant une teneur en métaux réfractaire > 50 % at., les métaux réfractaires comprenant les métaux à base de niobium, tantale, chrome, molybdène, tungstène et rhénium, et le procédé comprenant les étapes de préparation d'une poudre formée par des particules et de consolidation de la poudre sous l'action d'un faisceau laser ou d'électrons, **caractérisé en ce que** la poudre présente une taille de particule d₅₀ mesurée optiquement par laser > 10 µm et une surface moyenne mesurée selon BET > 0,08 m²/g.

2. Procédé selon la revendication 1, **caractérisé en ce que** la surface des particules comprend au moins partiellement des pores.

3. Procédé selon l'une quelconque des revendications précédentes, **caractérisé en ce que** la poudre présente une distribution des tailles de particules bi- ou multimodale.

4. Procédé selon l'une quelconque des revendications précédentes, **caractérisé en ce que** la poudre comprend des particules de poudre sous forme agglomérée et/ou agrégée, qui sont formées par des particules primaires.

5. Procédé selon l'une quelconque des revendications précédentes, **caractérisé en ce que** la poudre contient 0,005 à 5 % at. d'au moins un élément du groupe constitué par Ni, Co, Fe et Pd.

6. Procédé selon l'une quelconque des revendications précédentes, **caractérisé en ce que** la poudre se présente au moins partiellement sous la forme d'une poudre composite.

7. Procédé selon l'une quelconque des revendications précédentes, **caractérisé en ce que** la poudre se présente au moins partiellement sous la forme d'une poudre revêtue.

8. Procédé selon l'une quelconque des revendications précédentes, **caractérisé en ce que** les particules présentent au moins partiellement dans des zones proches de la surface un point de fusion plus faible que dans des zones proches du centre.

9. Procédé selon la revendication 8, **caractérisé en ce que** la différence de point de fusion (en K) est de 0,04 à 0,7 x point de fusion (en K) de la zone proche du centre.

10. Procédé selon l'une quelconque des revendications précédentes, **caractérisé en ce que** la fabrication de la poudre comprend une étape de granulation.

11. Procédé selon la revendication 10, **caractérisé en ce que** l'étape de granulation est suivie par une étape de réduction à une température > 500 °C.

12. Procédé selon l'une quelconque des revendications précédentes, **caractérisé en ce que** la fabrication de la poudre comprend une étape de revêtement.

13. Procédé selon l'une quelconque des revendications précédentes, **caractérisé en ce que** la poudre contient > 80 % at. d'au moins un élément choisi dans le groupe constitué par Mo et W.

14. Procédé selon l'une quelconque des revendications précédentes, **caractérisé en ce que** la surface BET est > 0,1 m²/g, de préférence > 0,13 m²/g.

15. Procédé selon l'une quelconque des revendications précédentes, **caractérisé en ce que** la poudre est appliquée en couches.

16. Procédé selon l'une quelconque des revendications précédentes, **caractérisé en ce que** la consolidation de la poudre a lieu sous l'action d'un faisceau d'électrons, les particules de la poudre appliquée en couches formant au moins partiellement des cols de frittage lors d'une première étape par frittage en phase solide et étant au moins partiellement fondues lors d'une étape ultérieure.

17. Procédé selon la revendication 16, **caractérisé en ce que** la première étape a lieu avec un faisceau d'électrons défocalisé.

18. Procédé selon l'une quelconque des revendications 1 à 15, **caractérisé en ce que** la consolidation de la poudre a lieu au moins partiellement par frittage en phase solide ou frittage en phase liquide sous l'action d'un faisceau laser.
